Europäisches Patentamt

European Patent Office

Office européen des brevets

(11) Veröffentlichungsnummer: **0 386 622**
**A2**

# (12) EUROPÄISCHE PATENTANMELDUNG

(21) Anmeldenummer: **90103968.5**

(22) Anmeldetag: **01.03.90**

(51) Int. Cl.5: **A01N 25/34, B32B 27/18**

(30) Priorität: **04.03.89 DE 3906974**

(43) Veröffentlichungstag der Anmeldung:
**12.09.90 Patentblatt 90/37**

(84) Benannte Vertragsstaaten:
**AT BE CH DE DK ES FR GB IT LI NL SE**

(71) Anmelder: **ALTURA LEIDEN HOLDING B.V.**
**Wilhelminasingel 118**
**NL-6221 BL Maastricht(NL)**

(72) Erfinder: **Der Erfinder hat auf seine Nennung**
**verzichtet**

(74) Vertreter: **Klose, Hans, Dipl.-Phys. et al**
**Kurfürstenstrasse 32**
**D-6700 Ludwigshafen(DE)**

(54) **Platte aus Kunststoff.**

(57) Eine Platte aus einem Kunststoff ist insbesondere zum Einsatz in einer Duschabtrennung vorgesehen. Es soll die Aufgabe gelöst werden, zuverlässig einen Pilzbefall oder das Einnisten von Bakterien zu verhindern. Es wird vorgeschlagen, daß die Platte eine dünne Schicht auf wenigstens einer Außenseite aufweist, welche Schicht einen mikrobiziden Wirkstoff, insbesondere ein Fungizid und/oder einen antibakteriellen, Wirkstoff enthält. Der Kunststoff der Schicht weist eine kleine Porösität derart auf, daß einerseits Feuchtigkeit in die Schicht eindringen kann und andererseits während einer Trocknungsphase der mikrobizide Wirkstoff in minimalen Mengen an die Oberfläche föderbar ist.

EP 0 386 622 A2

## Platte aus Kunststoff

Die Erfindung bezieht sich auf eine Platte aus Kunststoff, zur Verwendung in Feuchträumen, insbesondere Duschabtrennungen, gemäß den im Oberbegriff des Patentanspruchs 1 angegebenen Merkmalen.

Kunststoffplatten der genannten Art werden heute üblicherweise durch Extrusionsverfahren aus geeigneten thermoplastischen Kunststoffen gefertigt und dienen, ähnlich wie Scheiben aus Silikatglas, zum Abtrennen von verschiedenen Räumen. Derartige Platten aus thermoplastischen Kunststoffen weisen bei einer Materialdicke in der Größenordnung von 5 mm eine mit Silikatglas vergleichbare oder etwas geringere Eigensteifigkeit auf. Im Gegensatz zu Kunststoff-Folien oder Kunststoffbahnen ist jedoch ein Aufrollen bei Zimmertemperatur, also bei ca. 20 Grad Celsius, nicht möglich. Zur Aussteifung, werden vor allem in Duschabtrennungen zur Gewährleistung einer funktionssicheren Abdichtung nach außen derartige Platten in Rahmen eingefaßt, wobei oftmals Dichtungen aus Elastomeren zum Einsatz gelangen. Infolge von Unregelmäßigkeiten der Plattenoberfläche, der Dichtungen oder der Rahmen können sich sogenannte "Problemzonen" ergeben, in welche Schmutz oder andere Fremdkörper eindringen können. In der Folge können sich durch Mikroben, wie Bakterien oder Pilze, erhebliche Probleme im Hinblick auf die hygienischen Anforderungen ergeben. Insbesondere in Feuchträumen, wie Duschräumen und Badezimmern, wird diese Gefahr infolge der Wärmeeinwirkung zusammen mit Feuchtigkeit wesentlich erhöht. Auch die beste Reinigung und Pflege von Duschabtrennungen und dergleichen kann in der Praxis nicht mit der notwendigen Sicherheit das Eindringen von Schmutz und/oder das Festsetzen von Pilzen bzw. Bakterien in Verbindungs-und/oder Eckbereichen verhindern. Auch der gelegentliche Einsatz von chemischen Reinigungsmitteln gegen einen derartigen Befall führt in der Regel nicht zu einem dauerhaften Erfolg, da selbst starke Reinigungsmittel nur kurzfristig einwirken und nachfolgend mit klarem Wasser wieder abgespült werden, wobei die Problemzonen nicht vollständig erfaßt werden können.

Aus der DE 37 30 820 A1 ist eine desodorierende und schimmelverhütende Bahn bzw. Schicht aus Vinylchloridharz bekannt. In dieser Bahn bzw. Schicht sind ein Desodorierungsmittel und ein Pilzbefallverhütungsmittel enthalten, welche in Wasser kaum löslich oder unlöslich sind. Diese Bahn ist flexibel und kann nach Art einer Tapete zur Auskleidung von Wänden in Wohnräumen zum Einsatz gelangen. Diese Bahn ist über ihre gesamte Materialstärke mit den in Wasser kaum löslichen oder unlöslichen Mitteln versetzt und kann gegebenenfalls mit einem Klebestoff als eine Überzugsschicht auf einen textilen Stoff aufgebracht werden.

Ferner ist aus der EP 304 180 A2 ein stabilisiertes Mittel gegen Mikroben bekannt, welches Mittel eine bestimmte chemische Zusammensetzung nach einer vorgegebenen Strukturformel aufweist. Dieses Mittel wird thermoplastischen Faserwerkstoffen zugesetzt. Bekanntlich weisen Faserwerkstoffe und daraus hergestellte Gewebe oder dergleichen insgesamt eine große Materialoberfläche auf, so daß das in den Fasern enthaltene Mittel auf die Mikroben einwirken kann. Andererseits werden vergleichsweise große Mengen dieses Mittel benötigt, da dieses in den Fasern über deren gesamte Querschnittsfläche verteilt vorhanden ist.

Aus der US 46 49 079 A ist ein Verfahren bekannt, gemäß welchem Fasern ein Mittel gegen Mikrobenbefall zugesetzt werden kann. Für dieses Mittel ist eine besondere Strukturformel angegeben. Die nach dem Verfahren hergestellten Fasern enthalten das Mittel in einer weitgehend homogenen Verteilung über den Querschnitt der Fasern. Derartigen Faserwerkstoffe gelangen bei den eingangs erwähnten Platten nicht zum Einsatz. Da über die Querschnittsfläche der Fasern eine weitgehend gleichmäßige Verteilung des Mittels vorhanden ist, ergibt sich ein insgesamt hoher Verbrauch dieses Mittels.

Schließlich sind in der Zeitschrift "Plastverarbeiter, 28. Jahrgang, 1977, Nr. 5, Seiten 247 - 254" Zusatzstoffe für Kunststoffe beschrieben. Hierbei werden die grundlegenden Anforderungen und Unterschiede von Zusatzstoffen, wie Antistatika, mikrobentötende Zusätze, Treibmittel, usw. beschrieben. Hinsichtlich der mikrobentötenden Zusätze wird angegeben, daß nicht die Kunststoffe wie beispielsweise Polyvinylchlorid (PVC) oder Polyäthylen (PE) zur Bakteriennahrung dienen würden, sondern besondere Zuschläge wie Füllstoffe, Weichmacher, Pigmente, Stabilisatoren und Verarbeitungshilfen. Allgemein wird ausgeführt, welche Anforderungen die mikrobentötenden Zusätze erfüllen müssen, ohne jedoch eine spezielle technische Lösung insoweit anzugeben.

Der Erfindung liegt daher die Aufgabe zugrunde, eine Platte aus Kunststoff vorzuschlagen, welche den Anforderungen an die Hygiene in vollem Umfange gerecht wird. Die Herstellung der Platte soll in zuverlässiger Weise durchgeführt werden können, wobei im übrigen die gewünschten Materialeigenschaf ten der Platte aufgrund des zum Einsatz gelangenden Kunststoffes beibehalten werden sollen.

Die Lösung dieser Aufgabe erfolgt gemäß den im Kennzeichen des Patentanspruchs 1 angegebenen Merkmalen.

Mit der erfindungsgemäß vorgeschlagenen Platte werden die oben aufgezeigten Nachteile vermieden und des wird den Anforderungen an die Hygiene in vollem Umfange entsprochen. Die Platte enthält auf wenigstens einer Seite eine Kernes eine dünne Schicht, die einen antibakteriellen Wirkstoff und/oder Mikrobizid und/oder ein Fungizid enthält. Diese Schicht besteht grundsätzlich aus dem gleichen Werkstoff wie der Kern der Platte, so daß insbesondere im Hinblick auf das Temperaturverhalten weder Fertigungsprobleme noch Schwierigkeiten in der Formbeständigkeit sich ergeben. Dies steht im Gegensatz zu bisher bekanntgewordenen Mehrschichtplatten, wobei insbesondere zur Verstärkung entweder in die Platte oder auf die Oberfläche der Platte eine Schicht aus einem anderen Werkstoff und mit anderen Materialeigenschaften angeordnet wurde. Der Kern der Platte und ebenso die dünne Schicht weisen eine Steifigkeit auf, welche zumindest annähernd der von Silikatglas entspricht. Da der Kern und die Schicht aus dem gleichen Werkstoff bestehen, wird durch die Schicht selbst die Steifigkeit der gesamten Platte nicht reduziert. Dies steht im Gegensatz zu Bahnen oder Kunststoffolien, welche eine hohe Flexibilität aufweisen und bei einer Beschichtung die Steifigkeit des Grundkörpers nicht verbessern. Die erfindungsgemäße Platte kann daher in der gleichen Weise wie herkömmliche Platten in Rahmen eingesetzt werden oder bedarfsweise auch ohne derartige Rahmen zum Einsatz gelangen, so daß insoweit im Hinblick auf Rahmen, Scharniere, Dichtprofile, Abstände zu Türrahmen oder dergleichen keine Konstruktionsänderungen, insbesondere bei Duschabtrennungen, vorgenommen werden müssen.

In einer zweckmäßigen Ausgestaltung weist die Platte an ihrer Oberfläche Strukturen in Form von Erhebungen und/oder Vertiefungen auf, um dem Erscheinungsbild der Platte das gewünschte Design zu vermitteln. So werden vor allem streifenförmige oder tropfenartige Strukturen vorgesehen, welche nach der Herstellung der Platte mit Kern und der dünnen Schicht in diese dünne Schicht eingebracht werden. Wesentlich ist hierbei, daß die Vertiefungen maximal die Tiefe aufweisen, welche der Materialdicke der dünnen äußeren Schicht entspricht, welche den antibakteriellen Wirkstoff und/oder das Fungizid enthält. In derartigen streifenförmigen, tropfenartigen oder perlenförmigen Strukturen besteht eine besonders große Gefahr, daß sich dort Kalk, Seifenreste oder gar Schmutz festsetzen, in welche sich dann leicht Mikroben oder Pilze einnisten können. Da die Vertiefungen jedoch ausschließlich in der äußeren Schicht, also nicht bis in den Kern hinein vorgesehen sind, werden dort durch den erfindungsgemäßen Wirkstoff die Mikroben bzw. durch das Fungizid Pilze abgetötet. Die erfindungsgemäße Platte mit Strukturen in der Oberfläche zeichnet sich daher durch eine hohe Lebensdauer aus, ohne daß hierbei die Gefahr des Befalls durch Mikroben oder Pilze besteht. Der erfindungsgemäß in der Schicht enthaltene Wirkstoff ist ein Mikrobizid und/oder ein Fungizid, welches Mikroorganismen abtötet und entkeimend wirkt.

Der in der Schicht enthaltene mikrobizide Wirkstoff ist hygroskopisch und die erfindungsgemäße Platte gelangt in Feuchträumen, wie insbesondere Baderäumen oder Duschräumen, zum Einsatz. Der Kunststoff der Schicht weist eine äußerst geringe, gleichwohl aber hinreichende Porösität auf, so daß Feuchtigkeit, beispielsweise beim Duschen, eindringen kann und vom Wirkstoff aufgenommen werden kann. Nach dem Duschen wird der Feuchtigkeitsgehalt im Duschraum geringer und zur Herstellung des Gleichgewichtes diffundiert die in der Schicht enthaltene Feuchtigkeit wieder nach außen. Von besonderer Bedeutung ist, daß hierbei von dem Wirkstoff kleinste Spuren mit an die Oberfläche der Platte gefördert werden und dort die entkeimende Wirkung entfalten können. Die minimale Porösität der Schicht einerseits und die hygroskopische Wirkung des Wirkstoffes andererseits ergeben in der Kombination eine lange Wirksamkeit, da dem mikrobizide Wirkstoff über einen langen Zeitraum von mehreren Jahren an die Oberfläche gelangt. Die Platte gelangt daher bevorzugt in solchen Feuchträumen zum Einsatz, in welchen nicht dauernd eine hohe Luftfeuchtigkeit vorherrscht, sondern an Phasen mit hohem Luftfeuchtigkeitsgehalt Trockenphasen anschließen, in welchen der Feuchtigkeitsgehalt der Umgebungsluft wesentlich reduziert ist. Die Platte kommt daher nicht zum Einsatz in solchen Räumen, in welchen dauernd eine hohe Luftfeuchtigkeit vorherrscht, wie es beispielsweise in Räumen mit schlechter Luftzirkulation, mangelnder Feuchtigkeitsisolation des Mauerwerks der Fall ist. Typischer Einsatzort ist ein Dusch-oder Badezimmer, in welchen beim Duschen durch den Wasserdampf eine hohe Luftfeuchtigkeit über einen Zeitraum von einer 1/2 oder einer ganzen Stunde sich einstellt und nachfolgend im übrigen Tagesverlauf die Luftfeuchtigkeit auf das übliche Niveau von Wohnräumen absinkt.

Die mit dem mikrobiziden, insbesondere antibakteriellen, Wirkstoff und/oder einem Fungizid versehene äußere Schicht weist eine im Vergleich zur Gesamtstärke der Platte geringe Materialdicke auf. Als besonders zweckmäßig hat sich eine Materialdicke im Bereich zwischen 0,15 und 0,4 mm erwiesen. Die Materialdicke der Schicht aus dem mikrobiziden Wirkstoff liegt im Bereich zwischen 2% bis 15% der Gesamtdicke der Platte, wobei sich in der Praxis ein Bereich zwischen 3% bis 10% als zweckmäßig erwiesen hat. Durch die Vorgabe der Materialdicke der das Mirkobizid enthaltenen Schicht wird ein Optimum hinsichtlich Lebensdauer bzw. Wirksamkeit des Mikrobizids einerseits und andererseits der bei der Fertigung benötigten Menge erreicht. Es wird das benötigte mikrobizide Wirkstoff- bzw. Fungizid-Volumen klein gehalten, und gleichwohl wird für die gesamte zu erwartende Lebensdauer der Platte ein hinreichend großer Vorrat bereitgehalten. Die Gesamtmaterialdicke der Platte liegt im Bereich zwischen 2 bis 8 mm, insbesondere zwischen 3 bis 6 mm, wobei der Kern Farbstrukturen, Gewebebahnen und dergleichen enthalten kann, die das Design der gesamten Platte bestimmen. Der Kunststoff der Schicht und des Kerns ist transparent oder doch im wesentlichen durchscheinend, so daß diese Strukturen, Farben usw. nach außen hin einem Betrachter sichtbar sind. Aufgrund der dünnen Ausbildung der Schicht wird gewährleistet, daß das Lichtdurchlaßverhalten der dünnen Schicht im wesentlichen übereinstimmt mit dem des Plattenkerns. Damit ist es möglich auch solche Fungizide, mikrobizide bzw. antibakterielle Wirkstoffe zum Einsatz zu bringen, welche selbst eine andere Farbgebung aufweisen oder zusammen mit dem Kunststoff die Farbwirkung derselben verändern.

Der Wirkstoff ist in der Lage über einen langen Zeitraum von vielen Jahren allmählich aus der Schicht nach außen zu dringen und wirksam zu werden. Besonders zweckmäßig ist es für den Einsatz in Feuchträumen, insbesondere Duschabtrennungen, solche Kunststoff- und Wirkstoff- bzw. Fungizid-Kombinationen vorzusehen, die unter Einwirkung von Feuchtigkeit und verstärkt durch Wärmeeinwirkung Feuchtigkeit aufnehmen und somit in einem vorgegebenen, bevorzugt geringen, Maße hygroskopisch wirksam werden. Beim Duschen und Einwirken des Wasserdampfes wird von der Kunststoffplatte, und zwar deren äußeren Schicht, Wasser aufgenommen. In einer nachfolgenden Trockenphase wird dieses Wasser wieder vom Kunststoff abgegeben, wobei gleichzeitig auch das Fungizid und/oder der antibakterielle Wirkstoff in kleinsten Mengen an die Oberfläche gefördert wird und dort seine Wirksamkeit entfalten kann.

Im Unterschied zu sogenannten Schutzfolien, die zeitweilig an der Oberfläche einer Platte befestigt werden können, ist die erfindungsgemäß vorgesehene dünne Schicht eine homogene Verbindung mit dem Kern der Platte eingegangen. Die dünne Schicht besteht aus dem gleichen Kunststoff wie der Kern und wird insbesondere durch Coextrusion gleichzeitig mit dem Kern zu einer integral verbundenen Einheit und Platte gefertigt. Der antibakterielle Wirkstoff wird vor der Extrusion mit einem Teil des Kunststoffes vermengt, der später die äußere Schicht bildet und fest und unlösbar mit dem Kern verbunden ist. Es ist eine Übergangszone zwischen dem Kern und der dünnen Schicht vorhanden, in welcher die Konzentration des Mikrobizids abnimmt. Sofern die Oberfläche der Platte mit zur Erzielung eines besonderen Designs mit Strukturen versehen ist, so können die tiefsten Stellen dieser Strukturen im Rahmen dieser Erfindung auch bis in diese Übergangszone hineinreichen. Jedoch reichen diese Vertiefungen nicht bis in den Kern der Platte hinein, um zu Verhindern, daß in diesen Vertiefungen aufgrund von sich dort festsetzenden Kalk- oder Schmutzablagerungen keine wie z. B. Bakterien oder Pilze sich einnisten, welche aufgrund einer zu geringen Konzentration des Mikrobizids nicht mehr abgetötet werden können. Aufgrund der vergleichsweise dünnen Ausbildung der äußeren Schicht wird darüberhinaus sichergestellt, daß die Platte in ihrer Lichtdurchlässigkeit oder Farbwirkung durch den Wirkstoff oder das Fungizid nachteilig beeinträchtigt würde.

Die Platte wird zweckmäßig in einem Extrusionsverfahren hergestellt, wobei Temperaturen im Bereich vom 200 Grad Celsius vorherrschend sind. Es gelangen daher im Rahmen der Erfindung nur solche Fungizide und antibakterielle Wirkstoffe zum Einsatz, welche temperaturbeständig sind bis zu 200 Grad Celsiuis und zweckmäßig auch darüber bis in einen Bereich von 250° C. Damit wird sichergestellt, daß die chemischen Verbindungen und damit die Wirksamkeit nicht nachteilig beeinträchtigt werden. Darüberhinaus wird durch diese Auswahl der Bereich der möglichen Wirkstoffe und Fungizide erheblich eingeschränkt, doch wird andererseits aber auch gewährleistet, daß die Farbgebung und insgesamt das chemische Verhalten sich bei der Herstellung nicht oder nur minimal ändert, wobei aber die Herstellung nach herkömmlichen Verfahren sowie mit herkömmlichen Maschienen erfolgen kann.

## Ansprüche

1. Platte aus einem Kunststoff, zum Einsatz in Feuchträumen, insbesondere Duschabtrennungen, dadurch gekennzeichnet, daß auf wenigstens einer Außenseite eines Kernes eine dünne Schicht angeordnet ist, welche einen mikrobiziden Wirkstoff, insbesondere ein Fungizid und/oder einen antibakteriellen Wirkstoff, enthält, und daß die Schicht eine Porösität derart aufweist, daß unter Einwirkung von Feuchtigkeit und/oder Temperatur der mikrobizide Wirkstoff an die Oberfläche der Platte förderbar ist.

2. Platte nach Anspruch 1, dadurch gekennzeichnet, daß die dünne Schicht aus den gleichen Kunststoff wie der Plattenkern besteht, wobei in dem Kunststoff der dünnen Schicht das Fungizid und/oder der antibakterielle Wirkstoff vor der Plattenherstellung in den für die äußere Schicht bestimmten Anteil des Kunststoffes beigemengt wurden.

3. Platte nach Anspruch 1 oder 2, dadurch gekennzeichnet, daß die Materialstärke der Schicht zwischen 0,15 und 0,4 mm liegt und zweckmäßig zwischen 0,2 und 0,3 mm liegt.

4. Platte nach einem der Ansprüche 1 bis 3, dadurch gekennzeichnet, daß die Materialdicke der dünnen Schicht im Bereich zwischen 2% bis 15%, zweckmäßig zwischen 3% bis 10%, der Gesamtdicke der Platte groß ist, wobei die Materialdicke der Schicht bevorzugt zwischen 4 und 8% der Gesamtdicke der Platte groß ist.

5. Platte nach einem der Ansprüche 1 bis 3, dadurch gekennzeichnet, daß die Platte auf beiden Seiten jeweils die genannte Schicht aufweist.

6. Platte nach einem der Ansprüche 1 bis 4, dadurch gekennzeichnet, daß in dem Kunststoff der Schicht der mikrobizide Wirkstoff über die gesamte Fläche gleichmäßig verteilt angeordnet ist, wobei in der Verbindungszone zwischen der dünnen Schicht und dem Plattenkern eine allmähliche Abnahme vorhanden ist.

7. Platte, insbesondere nach einem der Ansprüche 1 bis 6, dadurch gekennzeichnet, daß der mikrobizide Wirkstoff hygroskopisch ist und/oder zumindest in einem vorgegebenen Maße wasserlöslich oder vom Wasser aufnehmbar ist

8. Platte nach einem der Ansprüche 1 bis 7, dadurch gekennzeichnet, daß die Platte in der Oberfläche, welche gleichzeitig die Oberfläche der Schicht mit dem mikrobiziden Wirkstoff ist, Strukturen in Form von Vertiefungen, bevorzugt in Kombination mit Erhebungen aufweist, und daß die sich in Richtung zum Kern erstreckenden Vertiefungen maximal so tief sind wie die Materialdicke der Schicht zusammen mit der Dicke der Verbindungszone, wobei zweckmäßig die Vertiefungen maximal nur so tief sind wie die Materialdicke der Schicht allein.

9. Platte nach einem der Ansprüche 1 bis 8, dadurch gekennzeichnet, daß der mikrobizide Wirkstoff bei Reduzierung der Umgebungstemperatur und/oder der Luftfeuchtigkeit der Umgebung durch die von der Platte an die Umgebung abgegebene Feuchtigkeit in geringen Mengen an die Oberfläche der Platte gefördert wird.

10. Platte nach einem der Ansprüche 1 bis 9, dadurch gekennzeichnet, daß der mikrobizide Wirkstoff eine Temperaturbeständigkeit bis mindestens 200 Grad Celsius und zweckmäßig bis in den Bereich von 250 Grad Celsius aufweist.